# EUROPEAN PATENT SPECIFICATION

(11) **EP 1 900 798 B1**
(45) Date of publication and mention of the grant of the patent: **25.07.2018**
(21) Application number: 06757174.5
(22) Date of filing: 08.06.2006
(51) Int. Cl.: C10N 10/04, C10N 30/06, C10N 50/10, C10M 169/06, B60B 27/00, F16C 19/18, C10N 40/02

(54) **HUB BEARING**
NABENLAGER
ROULEMENT DE MOYEU

(30) Priority: 09.06.2005 JP 2005169879; 09.06.2005 JP 2005169903
(43) Date of publication of application: 19.03.2008
(73) Proprietor: NTN Corporation, Osaka-shi, Osaka 550-0003 (JP)
(72) Inventor: EGAMI, Masaki c/o NTN Corporation, Kuwana-shi Mie 511-8678 (JP); MINAMI, Masami c/o NTN Kongo Corporation, Osaka 586-0009 (JP)
(74) Representative: White, Duncan Rohan
(86) International application number: PCT/JP2006/311510
(87) International publication number: WO 2006/132314

(56) References cited:
- EP-A1- 0 869 166
- WO-A1-2004/007219
- WO-A1-2004/113481
- JP-A- 01 062 396
- JP-A- 11 061 168
- JP-A- 2000 026 877
- JP-A- 2002 103 905
- JP-A- 2003 013 083
- JP-A- 2004 091 764
- JP-A- 2004 114 851
- US-A- 6 020 290
- US-A1- 2002 137 639
- US-B1- 6 196 720

## Description

### TECHNICAL FIELD

The present invention relates to a hub bearing for rotatably supporting wheels of a car

### BACKGROUND ART

Till the 1970s, in the hub bearing for use in a car, the design of arranging two standard bearings conforming to ISO specification was mainly adopted. In the 1980s, to provide improvement in the mounting of the bearing on the car, car makers came to adopt a double row angular contact ball bearing or a double row tapered roller bearing in which outer rings of bearings arranged were held together as a unit with the backs of the bearings opposed to each other. These hub bearings are called the first generation hub bearing (GEN 1). By holding the outer rings together as a unit, an initial axial gap was set to a proper value in assembling the hub bearing. Thus it was unnecessary to adjust a preload in mounting the hub bearing on the car. Thereafter a double row bearing, having a flange portion provided on the outer ring, which is called the second generation hub bearing (GEN 2) was developed. Because merely the arrangement of two standard bearings had a limitation in a decrease of the weight and size of the hub bearing, a shaft (hub ring) and a housing (knuckle) which are peripheral parts of the bearing were held together as a unit to decrease the number of parts and the weight of the hub bearing. By changing the fixing of the hub bearing to the knuckle from press fit to bolt tightening, it became easy to mount the hub bearing on the car. In the third generation hub bearing (GEN 3), the shaft (hub ring) and the-inner ring of the bearing were held together as a unit to remove excess thickness, and the line-assembling efficiency was improved. Recently the fourth generation hub joint (GEN 4) in which the hub bearing and a constant-velocity joint are held together as a unit has been developed.

Recently the GEN 2 and the GEN 3 are increasingly adopted because as described above, in the GEN 2 and the GEN 3, the workability inmounting the bearing on the car is improved considerably, stability in travel of the car is improved owing to a decreases in the amount of a spring load caused by the elimination of press fit, and the use of a knuckle made of a light alloy effective for decreasing fuel expenses can be adopted.

Paying attention to the material of the bearing, till the adoption of the GEN 1, ordinary bearing steel (for example, SUJ2) was used. In the GEN 2 and the GEN 3 having the flange mounted on the outer ring, the carbon steel for machine structural use such as S53C which has a favorable forgeability and is inexpensive came to be used. The carbon steel for machine structural use secures the rolling fatigue strength of the bearing portion by heat-treating the raceway portion with a high-frequency wave. But the carbon steel for machine structural use has a low surface strength because it contains a small amount of an alloy component and is inferior to the bearing steel in the resistance of the bearing to peeling starting from the surface thereof. Therefore in the same lubricating specification as that for the GEN 1, the carbon steel for machine structural use used in the GEN 2 and the GEN 3 has an inferior durability when use conditions therefor are strict.

Regarding the improvement of the grease for the hub bearing, the decrease of the rotational torque by the adoption of a low-viscosity base oil (see patent document 1) and the impartation of conductivity for the removal of static electricity (see patent document2) are known. But since the adoption of the GEN 2, no progress has been made on the improvement of the resistance of the hub bearing to the peeling starting from the surface thereof. Because the weights of parts are decreased to reduce fuel expense and improve operation stability, the size of the hub bearing is necessarily decreased, and owing to a rise of a face pressure, the lubricating condition has become strict. EP 0 869 166 A1, US 6 020290 A, US 6 196 720 B1 disclose grease compositions.
Patent document 1: Japanese Patent Application Laid-Open No. 2003-239999
Patent document 2: Japanese Patent Application Laid-Open No. 2004-169862

### DISCLOSURE OF THE INVENTION

### PROBLEMS TO BE SOLVED BY THE INVENTION

The present invention has been made in view of such a situation and has for its object to provide a hub bearing, made of carbon steel for machine structural use, which has a long life even in a strict lubricating condition by improving the resistance of the hub bearing to peeling starting from the surface thereof.

### MEANS FOR SOLVING THE PROBLEMS

The invention provides a hub bearing as claimed in claim 1 and the use of a grease as claimed in claim 8. The hub bearing includes a grease enclosed in the hub bearing for rotatably supporting wheels of a car. The grease contains a base oil, a thickener, and an organozinc compound which is at least one compound selected from dithiozinc carbamate (hereinafter referred to as ZnDTC) and dithiozinc phosphate (hereinafter referred to as ZnDTP).

The organozinc compound is contained at 0.1 to 20 mass % for the entire grease.

The thickener is an alicyclic-aromatic urea compound prepared by the reaction between aromatic diisocyanate, alicyclic monoamine and aromatic monoamine, being a diurea compound and contained at 1 to 40 mass % for the entire grease,

The base oil is mineral oil or mixed oil of mineral oil and synthetic hydrocarbon oil.

The base oil is contained at 59 to 98 mass % for the entire grease.

The base oil is contained at 65 to 98 mass % for the entire grease.

The thickener is a diurea compound.

The diurea compound is a compound shown by the following formula (1) and is contained at 1 to 40 mass % for the entire grease.

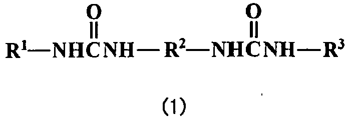

In the formula (1), R² indicates an aromatic hydrocarbon group having 6 to 15 carbon atoms, and R¹ and R³ indicate at least one hydrocarbon group selected from an alicyclic hydrocarbon group and the aromatic hydrocarbon group.

The hub bearing of the present invention has a rolling contact portion made of carbon steel for machine structural use. The grease for the hub bearing is enclosed therein.

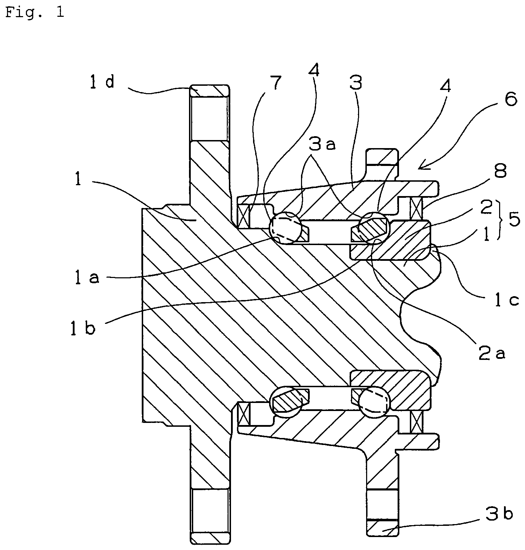

The rolling contact portion means, for example in the hub bearing shown on Fig. 1, a rolling contact portion between an inward member having a hub ring and an inner ring and double row rolling elements and between an outward member consisting of an outer ring and the double row rolling elements . The double row rolling elements are disposed between the inward member and the outward member. The rolling contact portion is called a raceway portion which is heat-treated with a high-frequency wave.

The grease is enclosed in a ring-like space surrounded with the inwardmember, the outwardmember, and two sealingmembersmounted to seal the space between both members with the sealing members axially sandwiching the double row rolling elements therebetween.

### EFFECT OF THE INVENTION

Grease for a hub bearing of the present invention is enclosed in the hub bearing for rotatably supporting wheels of a car. The grease contains the base oil, the thickener, and ZnDTC and/or ZnDTP as the organozinc compound. Therefore it is possible to suppress the peeling starting from the surface of the hub bearing for use in a car. The bearing in which the raceway ring is composed of the carbon steel for machine structural use has a long life, even though the lubricating condition is strict.

The hub bearing of the present invention encloses the grease which contains the base oil, the thickener, and ZnDTC and/or ZnDTP as the organozinc compound. Therefore it is possible to suppress the peeling starting from the surface, even though the carbon steel for machine structural use is used for the raceway ring, and further the bearing has a long life, even though the lubricating condition is strict.

### BEST MODE FOR CARRYING OUT THE INVENTION

The hub bearing of the present invention is made of carbon steel for machine structural use, and some portion thereof is made of a material heat-treated with a high-frequency wave. The hub bearing has the above-described material at a portion thereof where a rolling element rolls. Grease lubricates the rolling contact portion of the hub bearing.

As a result of the investigation into the durability of the hub bearing, it has been found that the hub bearing in which the grease containing ZnDTC and/or ZnDTP as the organozinc compound is enclosed has improved lubricating performance in its rolling contact portion. The present invention has been completed based on the finding.

The ZnDTC which can be used in the present invention is also called as zinc sulfide dialkyldithiocarbamate, and is shown by the following formula (2).

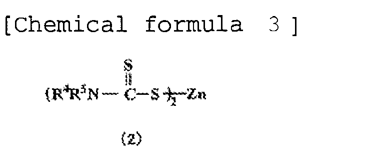

In the formula (2), R⁴ and R⁵ indicate an aliphatic hydrocarbon group having 1 to 24 carbon atoms, preferably 3 to 18 carbon atoms. As a commercially available product of ZnDTC, VANLUBE AZ (produced by R.T. Vanderbilt Company, Inc.) can be listed.

As the mixing ratio of ZnDTC which can be used in the present invention, ZnDTC is contained at 0.1 to 20 mass %, preferably at 1 to 10 mass % for the entire grease. If the mixing ratio is less than 0.1 mass %, it is hard to produce a desired effect, and if the mixing ratio is more than 20 mass %, the effect tops out and the grease property is deteriorated.

The ZnDTP which can be used in the present invention is also called as zincdithio-phosphate, and is shown by the following formula (3).

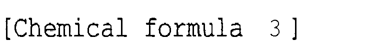

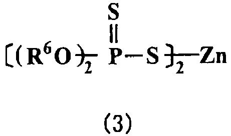

In the formula (3), R⁶ indicates a primary or secondary aliphatic hydrocarbon group or an aromatic hydrocarbon group. As commercially available products of ZnDTP, Lubrizol 1360 (produced by The Lubrizol Corporation) as a primary aliphatic hydrocarbon group, Lubrizol 667A (produced by The Lubrizol Corporation) as a secondary aliphatic hydrocarbon group, and TLA-252 (produced by Texaco Chemical Company) as an aromatic hydrocarbon group can be listed.

As the mixing ratio of ZnDTP which can be used in the present invention, ZnDTP is contained at 0.1 to 20 mass %, preferably at 1 to 10 mass % for the entire grease. If the mixing ratio is less than 0.1 mass %, it is hard to produce a desired effect, and if the mixing ratio is more than 20 mass %, the effect tops out and the grease property is deteriorated.

As the base oil which can be used in the grease for the hub bearing of the present invention, it is possible to list mineral oil, poly-α-olefin (hereinafter abbreviated as PAO) oil, an ester oil, phenyl ether oil, fluorine oil, and synthetic hydrocarbon oil (GTL base oil) synthesized by Fischer Tropsch reaction. Mixtures of these base oils can be also used.

As the mineral oil, it is possible to use ordinary lubricating oil such as naphthene mineral oil, paraffin mineral oil, liquid paraffin, hydrogenated dewaxed oil or the like, and substances which are used in the field of grease.

As the PAOoil, polymers of α-olefin, copolymers of the α-olefin and olefin, and polybutene are listed. These substances have structures having oligomers which are low polymers of the α-olefin and hydrogen added to the terminal double bond. The polybutene which is one kind of the α-olefin can be also used. The polybutene is produced by polymerizing a starting material containing isobutylene as its main component with a catalyst such as aluminum chloride. The polybutene can be used as it is or by hydrogenating it.

As examples of other α-olefin, it is possible to list 1-octane, 1-nonen, 1-decene, 1-dodecene, 1-tridecene, 1-tetradecene, 1-pentadecene, 1-hexadecene, 1-heptadecene, 1-octadecene, 1-nonadecene, 1-eicosane, 1-docosane, and 1-tetracosane. Normally, mixtures of these substances are used.

Considering the lubricating performance and the cost of these base oils, it is preferable to use a mineral oil or a mixed oil of a mineral oil and a synthetic hydrocarbon oil.

The base oil which can be used in the present invention is liquid at room temperature, and the kinematic viscosity thereof at 40°C is 30 to 200 mm²/second, preferably 40 to 120 mm²/second. If the kinematic viscosity of the base oil is less than 30mm²/second, the base oil deteriorates in a short period of time. Because a deteriorated substance accelerates deterioration of the entire base oil, the bearing has a lowered durability and has a short life. If the kinematic viscosity of the base oil is more than 200mm²/second, owing to an increase of the rotational torque, the temperature of the bearing rises, which is unpreferable.

As the mixing ratio of the base oil which is used in the present invention, the base oil is contained at preferably 59 to 98 mass %, more preferably 65 to 98 mass %, and most preferably 70 to 95 mass % for the entire grease.

If the mixing ratio of the base oil is less than 59 mass %, the grease is hard and thus has a low lubricating performance at a low temperature. If the mixing ratio of the base oil is more than 98 mass %, the grease is soft and thus liable to leak. The thickener which is used for the grease in the hub bearing in consideration of durability and fretting resistance, is the urea compound. The urea compound is shown by the following chemical formula (1).

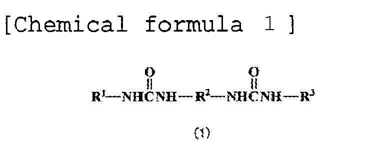

In the formula (1), R² indicates an aromatic hydrocarbon group having 6 to 15 carbon atoms, and R¹ and R³ indicate at least one hydrocarbon group selected from an alicyclic hydrocarbon group and the aromatic hydrocarbon group.

The urea compound is produced by reacting an isocyanate compound and an amine compound with each other. To prevent a reactive free radical from remaining unreacted, it is preferable to mix the isocyanate group of the isocyanate compound and the amino group of the amine compound with each other in an approximately equivalent weight.

In the reaction, after monoamine acid and diisocyanates are reacted sufficiently with each other in the base oil having a temperature of 70 to 110°C, the temperature is risen to 120 to 180°C at which the mixture is held for 1 to 2 hours . Thereafter the mixture is cooled and homogenizing treatment is carried out by using a homogenizer, a three-roll mill or the like to produce base grease to which various additives are added.

The diurea compound shown by the formula (1) is prepared, for example, by the reaction between diisocyanate and monoamine. As the diisocyanate, it is possible to list phenylene diisocyanate, diphenyl diisocyanate, diphenyl methane diisocyanate, 1,5-naphtylene diisocyanate, 2,4-tolylene diisocyanate, 3,3-dimethyl-4,4-biphenylene diisocyanate, octadecane diisocyanate, decane diisocyanate, and hexane diisocyanate. As the monoamine, it is possible to list octylamine, dodecylamine, hexadecylamine, stearylamine, oleylamine, aniline, p-toluidine, and cyclohexylamine.

In the present invention, alicyclic-aromatic urea compounds produced by the reaction between aromatic diisocyanate, alicyclic monoamine, and aromatic monoamine are used.

The mixing ratio of the thickener which is used in the present invention is preferably 1 to 40 mass % and more preferably 3 to 25 mass % for the entire grease. If the mixing ratio of the thickener is less than 1 mass %, the thickening effect is small, and greasing is difficult. If the mixing ratio of the thickener is more than 40 mass %, the grease becomes so hard that it is difficult to produce a desired effect.

Known additives can be added to the grease of the present invention for use in the hub bearing as necessary in the range in which the additives do not deteriorate the function of the grease. As the additives, it is possible to list an antioxidant such as amine compounds, phenol compounds, sulfur-containing compounds; a wear inhibitor such as sulfur-containing compounds and phosphorus-containing compounds; a rust proof agent such as metal sulfonate and polyvalent alcohol ester; and a detergent dispersant such as metal sulfonate and metal phosphate. These additives can be added to the grease singly or in combination of two or more kinds thereof.

Fig. 1 shows an example (third generation hub bearing for use in driven wheel) of the hub bearing of the present invention. Fig. 1 is a sectional view of the hub bearing. A hub bearing 6 has an inward member 5 having a hub ring 1 and an inner ring 2 and an outward member 3 consisting of an outer ring, and double row rolling elements 4, 4. The hub ring 1 has a wheel-mounting flange 1d integral with the hub ring 1 at its one end for mounting a wheel (not shown) thereon. Formed on a periphery of the hub ring 1 are an inside rolling surface 1a and a small-diameter stepped portion extended axially from the inside rolling surface 1a.

In the present specification, "outside" in the axial direction means an outer side in the widthwise direction in a state where the hub bearing is mounted on a car, whereas "inside" means a central side in the widthwise direction.

The inner ring 2 having an inside rolling surface 2a formed on the periphery thereof is fitted in the small-diameter stepped portion 1b of the hub ring 1 by press fit. The removal of the inner ring 2 from the hub ring 1 in the axial direction is prevented by a caulking portion 1c formed by plastically deforming an end of the small-diameter stepped portion 1b of the hub ring 1 radially outward.

The outward member 3 has on its periphery a flange 3b which is mounted on a car and integral therewith and has on the inner periphery the double row rolling elements 4, 4 rollingly accommodated between the outside rolling surfaces 3a, 3a and the inside rolling surfaces 1a, 2a opposed to the double row outside rolling surfaces 3a, 3a.

The grease for use in the hub bearing is enclosed in the space surrounded with a sealing member 7, the outward member 3, a sealing member 8, the inward member 5, and the hub ring 1 so that the grease covers the periphery of the double row rolling elements 4, 4 sandwiched between the outward member 3 and the inward member 5 and lubricates the rolling contact portion between the rolling surfaces of the rolling elements 4, 4 and the inside rolling surfaces 1a, 2a as well as the outside rolling surfaces 3a, 3a.

The grease for use in the hub bearing can be also used for bearings other than the hub bearing to which a high load is applied. The material that is used for the hub bearing of the present invention, is carbon steel for machine structural use. Carbon steel for machine structural use such as S53C has a favorable forgeability and is inexpensive. The carbon steel for machine structural use is generally used after the rolling fatigue strength of the bearing portion is secured by heat-treating it with a high-frequency wave. But even though the carbon steel for machine structural use is heat-treated with the high-frequency wave, the carbon steel for machine structural use has a low surface strength and is inferior to the bearing steel in the resistance to the peeling starting from the surface of the bearing at the rolling contact portion. By improving the lubricating performance of the grease for use in the hub bearing at the rolling contact portion, it is possible to prevent the peeling starting from the surface of the hub bearing made of the carbon steel for machine structural use.

### EXAMPLES

The present invention is described in detail by way of examples and comparative examples, but not restricted thereby.

### EXAMPLES 1 through 3 and COMPARATIVE EXAMPLES 1 through 3

A mineral oil/urea base grease (JIS consistency No.2 grade, consistency: 265 to 295) was prepared by uniformly dispersing a urea compound as a thickener in a mineral oil as a base oil. In 2000g of mineral oil (Super Oil C produced by Nippon Oil Corporation, kinematic viscosity at 40°C: 100mm²/second), 193.5g of diphenyl methane-4,4'-diisocyanate, 82.8g of p-toluidine, and 76.6g of cyclohexylamine were allowed to react with one another. The generated urea compound was uniformly dispersed to produce base grease, to which an additive was added at mixing ratios shown in table 1 to produce a grease for hub bearing.

Furthermore, one part by weight of sorbitan trioleate which is a rust proof additive, one part by weight of calcium sulfonate, and two parts by weight of alkyldiphenylamine which is an antioxidant were added to 100 parts by weight of the grease for hub bearing. A two-cylinder test described below was conducted on each grease for hub bearing to evaluate the resistance to the peeling from the surface. Table 1 shows the results.

### EXAMPLE 4

A mineral oil/urea base grease (JIS consistency No.2 grade, consistency: 265 to 295) was prepared by uniformly dispersing a urea compound as a thickener in a mineral oil as a base oil. In 2000g of mineral oil (Super Oil C produced by Nippon Oil Corporation, kinematic viscosity at 40°C: 100mm²/second), 149.5g of diphenyl methane-4,4'-diisocyanate, 64.0g of p-toluidine, and 59.2g of cyclohexylamine were allowed to react with one another. The generated urea compound was uniformly dispersed to produce base grease, to which an additive was added at mixing ratios shown in table 1 to produce a grease for hub bearing.

Furthermore, one part by weight of sorbitan trioleate which is a rust proof additive, one part by weight of calcium sulfonate, and two parts by weight of alkyldiphenylamine which is an antioxidant were added to 100 parts by weight of the grease for hub bearing.

The prepared grease for the hub bearing was evaluated in a manner similar to that of the example 1. Table 1 shows the results.

### EXAMPLE 5

A mineral oil/urea base grease (JIS consistency No.2 grade, consistency: 265 to 295) was prepared by uniformly dispersing a urea compound as a thickener in a mineral oil as a base oil. In 2000g of mineral oil (Super Oil C produced by Nippon Oil Corporation, kinematic viscosity at 40°C: 100mm²/second), 309.2g of diphenyl methane-4,4'-diisocyanate, 132.4g of p-toluidine, and 122.5g of cyclohexylamine were allowed to react with one another. The generated urea compound was uniformly dispersed to produce base grease, to which an additive was added at mixing ratios shown in table 1 to produce a grease for hub bearing.

Furthermore, one part by weight of sorbitan trioleate which is a rust proof additive, one part by weight of calcium sulfonate, and two parts by weight of alkyldiphenylamine which is an antioxidant were added to 100 parts by weight of the grease for hub bearing.

The prepared grease for the hub bearing was evaluated in a manner similar to that of the example 1. Table 1 shows the results.

**[Table 1]**

| | | | Example | | | | | Comparative example | | |
|---|---|---|---|---|---|---|---|---|---|---|
| | | | 1 | 2 | 3 | 4 | 5 | 1 | 2 | 3 |
| Mixing ratio (mass %) | | | | | | | | | | |
| | Base oil | | 84.5 | 84 | 82 | 87 | 77 | 84.95 | 84 | 84 |
| | Thickener | | 15 | 15 | 15 | 12 | 22 | 15 | 15 | 15 |
| | Additive | | | | | | | | | |
| | | ZnDTC ¹⁾ | 0.5 | 1 | 3 | 1 | 1 | 0.05 | - | - |
| | | Sulfur-containing additive ²⁾ | - | - | - | - | - | - | 1 | - |
| | | MoDTC³ | - | - | - | - | - | - | - | 1 |
| Worked penetration (60 strokes) | | | 290 | 285 | 280 | 325 | 225 | 285 | 285 | 285 |

| Evaluation | | | | | | | | | | |
|---|---|---|---|---|---|---|---|---|---|---|
| | Area ratio of peeled portion (%) | | 9.2 | 6.3 | 12 | 7.6 | 8.5 | 22.2 | 18.5 | 19.7 |
| | Evaluation | | Good | Good | Good | Good | Good | Bad | Bad | Bad |

| | | | | | | | | | | |
|---|---|---|---|---|---|---|---|---|---|---|
| **1) R.T.Vanderbilt Company Inc.** : **Vanlube AZ** **2) The Lubrizol Corporation** : **Lubrizol LZ5346** **3) R.T.Vanderbilt Company Inc.** : **Molyvan 822** | | | | | | | | | | |

### • Two-cylinder test

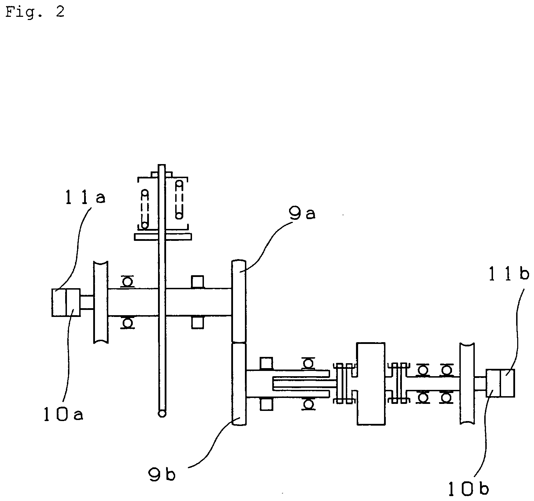

The resistance to the peeling starting from the surface was evaluated by using a two-cylinder testing machine. Fig. 2 is a schematic view of the two-cylinder testing machine. In Fig. 2, a driving-side cylinder 9a and a driven-side cylinder 9b are mounted at each end of a rotational shaft thereof. Test conditions of the two-cylinder testing machine are shown in table 2. The shaft of the driving-side cylinder 9a was driven by a motor, whereas the driven-side cylinder 9b was driven by the driving-side cylinder to allow the driven-side cylinder to rotate freely. An SUJ2 standard heat-treated product was used as the driving-side cylinder 9a, whereas a product S53C heat-treated with a high-frequency wave was used as the driven-side cylinder 9b. Each specimen has a surface hardness of HRC (Rockwell hardness C scale) 60 to 63. Hardness was measured in accordance with Japanese Industrial Standards (JIS) Z 2245.

The evaluation was made in terms of the area ratio of a peeled portion as viewed in an arbitrary visual field (%, total area of peeled portionX 100/total area of visual field) . For each specimen grease, the area ratio of the peeled portion were measured at three visual field points on the surface of the driven-side cylinder, and the average values are shown on Table 1.

Relative merits of each specimen grease were evaluated according to the area ratio of the peeled portion. The grease which had the area ratio of the peeled portion not more than 15% was evaluated as excellent in the resistance to the peeling starting from the surface and judged as "good" in table 1. The grease which had the area ratio of the peeled portion other than the above-described range was regarded as improper and judged as "bad" in table 1.

**[Table 2]**

| Testing machine | Two-cylinder testing machine |
|---|---|
| Driving-side cylinder | SUJ2, *φ* 39.6 × 12, minor radius of curvature R:60.3S |
| Driven-side cylinder | S53C, *φ* 39. 6 × 12, 0.2S |
| Number of rotations | 2000 rpm |
| Load | 2156 N |
| Maximum face pressure | 2.3 GPa |
| Load-applied number of times | 4.8×10⁵ times |
| Atmospheric temperature | 15°C to 25°C |
| Grease supply method | Grease-applied felt pad is pressed against driving-side cylinder |

In table 1, the grease of each of the examples 1 through 5 to which ZnDTC had been added had a small peeled area. On the other hand, the grease of each of the comparative examples 1 through 3 had a large peeled area.

### EXAMPLES 6 through 10 and COMPARATIVE EXAMPLES 4 through 6

A mineral oil/urea base grease (JIS consistency No.2 grade, consistency: 265 to 295) was prepared by uniformly dispersing a urea compound as a thickener in a mineral oil as a base oil. In 2000g of mineral oil (Super Oil C produced by Nippon Oil Corporation, kinematic viscosity at 40°C: 100mm²/second), 193.5g of diphenyl methane-4,4'-diisocyanate, 82.8g of p-toluidine, and 76.6g of cyclohexylamine were allowed to react with one another. The generated urea compound was uniformly dispersed to produce base grease, to which an additive was added at mixing ratios shown in table 3 to produce a grease for hub bearing.

Furthermore, one part by weight of sorbitan trioleate which is a rust proof additive, one part by weight of calcium sulfonate, and two parts by weight of alkyldiphenylamine which is an antioxidant were added to 100 parts by weight of the grease for hub bearing.

The above-described two-cylinder test was conducted on each grease for hub bearing to evaluate the resistance to the peeling from the surface. Table 3 shows the results.

### EXAMPLE 11

A mineral oil/urea base grease (JIS consistency No.2 grade, consistency: 265 to 295) was prepared by uniformly dispersing a urea compound as a thickener in a mineral oil as a base oil. In 2000g of mineral oil (Super Oil C produced by Nippon Oil Corporation, kinematic viscosity at 40°C: 100mm²/second), 149.5g of diphenyl methane-4,4'-diisocyanate, 64.0g of p-toluidine, and 59.2g of cyclohexylamine were allowed to react with one another. The generated urea compound was uniformly dispersed to produce base grease, to which an additive was added at mixing ratios shown in table 3 to produce a grease for hub bearing.

Furthermore, one part by weight of sorbitan trioleate which is a rust proof additive, one part by weight of calcium sulfonate, and two parts by weight of alkyldiphenylamine which is an antioxidant were added to 100 parts by weight of the grease for hub bearing.

The prepared grease for the hub bearing was evaluated in a manner similar to that of the example 6. Table 3 shows the results.

### EXAMPLE 12

A mineral oil/urea base grease (JIS consistency No.2 grade, consistency: 265 to 295) was prepared by uniformly dispersing a urea compound as a thickener in a mineral oil as a base oil. In 2000g of mineral oil (Super Oil C produced by Nippon Oil Corporation, kinematic viscosity at 40°C: 100mm²/ second), 309.2g of diphenyl methane-4,4'-diisocyanate, 132.4g of p-toluidine, and 122.5g of cyclohexylamine were allowed to react with one another. The generated urea compound was uniformly dispersed to produce base grease, to which an additive was added at mixing ratios shown in table 3 to produce a grease for hub bearing.

Furthermore, one part by weight of sorbitan trioleate which is a rust proof additive, one part by weight of calcium sulfonate, and two parts by weight of alkyldiphenylamine which is an antioxidant were added to 100 parts by weight of the grease for hub bearing.

The prepared grease for the hub bearing was evaluated in a manner similar to that of the example 6. Table 3 shows the results.

**[Table 3]**

| | | | Example | | | | | | | Comparative exanple | | |
|---|---|---|---|---|---|---|---|---|---|---|---|---|
| | | | 6 | 7 | 8 | 9 | 10 | 11 | 12 | 4 | 5 | 6 |
| Mixing ratio (mass %) | | | | | | | | | | | | |
| | Base oil | | 84.5 | 84 | 82 | 82 | 82 | 87 | 87 | 84.95 | 84 | 84 |
| | Thickener | | 15 | 15 | 15 | 15 | 15 | 12 | 22 | 15 | 15 | 15 |
| | Additive | | | | | | | | | | | |
| | | ZnDTP ¹⁾ | 0.5 | 1 | 3 | - | - | 1 | 1 | 0.05 | - | - |
| | | ZhDTP²⁾ | - | - | - | 1 | - | - | - | - | - | - |
| | | ZnDTP³⁾ | - | - | - | - | 1 | - | - | - | - | - |
| | | Sulfur-containing additive⁴⁾ | - | - | - | - | - | - | - | | 1 | |
| | | MoDTC⁵ | - | - | - | - | - | - | - | - - | - | 1 |
| Worked penetration (60 strokes) | | | 290 | 285 | 280 | 285 | 285 | 325 | 225 | 285 | 285 | 285 |
| Evaluation | | | | | | | | | | | | |
| | Area ratio of peeled portion (%) | | 8.4 | 5.8 | 11 | 7.5 | 9.8 | 7 | 7.8 | 23 | 18.6 | 19.8 |
| | Evaluation | | Good | Good | Good | Good | Good | Good | Good | Bad | Bad | Bad |

| | | | | | | | | | | | | |
|---|---|---|---|---|---|---|---|---|---|---|---|---|
| 1) The Lubrizol Corporation : Lubrizol 1360 (primary alkyl group) 2) The Lubrizol Corporation : Lubrizol 667A (secondary alkyl group) 3) Texaco Chemical Company : TIA-2522 (aryl group) | | | | | | | | | | | | |

In table 3, the grease of each of the examples 6 through 12 to which ZnDTP had been added had a small peeled area. On the other hand, the grease of each of the comparative examples 4 through 6 had a large peeled area.

### INDUSTRIAL APPLICABILITY

Grease for use in the hub bearing contains the base oil, the thickener, and ZnDTC and/or ZnDTP as the organozinc compound. Therefore it is possible to suppress the peeling, of the hub bearing for use in a car, starting from the surface thereof. The bearing in which the raceway ring is composed of the carbon steel for machine structural use has a long life even though the lubricating condition is strict. Therefore the grease can be preferably utilized for a railway rolling stock, a building machine, an electric auxiliary machine for a car demanded to have a high wear resistance and durability for a long time.

### BRIEF DESCRIPTION OF THE DRAWINGS

Fig. 1 is a sectional view of a hub bearing.
Fig. 2 is a schematic view of a two-cylinder testing machine.

### EXPLANATION OF REFERENCE SYMBOLS AND NUMERALS

1: hub ring
1a: inside rolling surface
1b: small-diameter stepped portion
1c: caulking portion
1d: wheel-mounting flange
2: inner ring
2a: inside rolling surface
3: outward member
3a: outside rolling surface
3b: flange to be mounted on car
4: rolling element
5: inward member
6: hub bearing
7: sealing member
8: sealing member
9a: driving-side cylinder
9b: driven-side cylinder
10a: driving-side tachometer
10b: driven-side tachometer
11a: driving-side slip ring
11b: driven-side slip ring

## Claims

1. A hub bearing for rotatably supporting a wheel of a car, having a rolling contact portion made of carbon steel for machine structural use,
wherein a grease is enclosed in said hub bearing said grease comprising a base oil, a thickener, and an organozinc compound,
wherein said organozinc compound is at least one compound selected from dithiozinc carbamate and dithiozinc phosphate,
said organozinc compound is contained at 0.1 to 20 mass % for the entire grease, and
said thickener is an alicyclic-aromatic urea compound prepared by the reaction between aromatic diisocyanate, alicyclic monoamine and aromatic monoamine, being a diurea compound shown by the following formula (1) and is contained at 1 to 40 mass % for the entire grease, 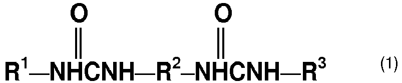 wherein R² indicates an aromatic hydrocarbon group having 6 to 15 carbon atoms, and R¹ and R³ indicate at least one hydrocarbon group selected from an alicyclic hydrocarbon group and an aromatic hydrocarbon group.

2. The hub bearing according to claim 1, wherein said base oil is a mineral oil.

3. The hub bearing according to claim 1, wherein said base oil is a mixed oil of a mineral oil and a synthetic hydrocarbon oil.

4. The hub bearing according to claim 1, wherein said base oil is contained at 59 to 98 mass % for entire grease.

5. The hub bearing according to claim 4, wherein said base oil is contained at 65 to 98 mass % for entire grease.

6. The hub bearing according to claim 1, wherein a material of said hub bearing for rotatably supporting said wheels of said car is carbon steel for machine structural use with a raceway portion thereof heat-treated with a high-frequency wave.

7. The hub bearing according to claim 6, wherein said raceway has a surface hardness of HRC (Rockwell hardness C scale) 58 to 63.

8. Use of a grease for a hub bearing rotably supporting the wheel of a car having a rolling contact portion made of carbon steel for machine structural use,
wherein said grease comprises a base oil, a thickener, and an organozinc compound,
wherein said organozinc compound is at least one compound selected from dithiozinc carbamate and dithiozinc phosphate,
said organozinc compound is contained at 0.1 to 20 mass % for the entire grease, and
said thickener is an alicyclic-aromatic urea compound prepared by the reaction between aromatic diisocyanate, alicyclic monoamine and aromatic monoamine, being a diurea compound shown by the following formula (1) and is contained at 1 to 40 mass % for entire grease, 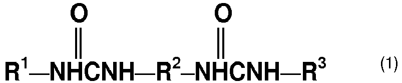 wherein R² indicates an aromatic hydrocarbon group having 6 to 15 carbon atoms, and R¹ and R³ indicate at least one hydrocarbon group selected from an alicyclic hydrocarbon group and an aromatic hydrocarbon group

## Patentansprüche

1. Nabenlager zum drehbaren Stützen eines Rads eines Wagens, das einen Wälzkontaktteil aufweist, der aus Kohlenstoffstahl für Maschinenbauanwendungen gefertigt ist,
wobei ein Fett in dem Nabenlager eingeschlossen ist, wobei das Fett ein Basisöl, ein Verdickungsmittel und eine Organozinkverbindung umfasst,
wobei die Organozinkverbindung mindestens eine Verbindung ist ausgewählt unter Dithiozinkcarbamat und Dithiozinkphosphat,
die Organozinkverbindung in einer Menge von 0,1 bis 20 Masse-% für das gesamte Fett enthalten ist und
das Verdickungsmittel eine alicyclische-aromatische Harnstoffverbindung ist, die durch die Reaktion zwischen aromatischem Diisocyanat, alicyclischem Monoamin und aromatischem Monoamin hergestellt wird, die eine Diharnstoffverbindung ist, die durch die folgende Formel (1) gezeigt ist, und in einer Menge von 1 bis 40 Masse-% für das gesamte Fett enthalten ist, 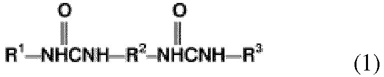 wobei R² eine aromatische Kohlenwasserstoffegruppe anzeigt, die 6 bis 15 Kohlenstoffatome aufweist und R¹ und R³ mindestens eine Kohlenwasserstoffgruppe anzeigen, ausgewählt unter einer alicyclischen Kohlenwasserstoffgruppe und einer aromatischen Kohlenwasserstoffgruppe.

2. Nabenlager nach Anspruch, wobei das Basisöl ein Mineralöl ist.

3. Nabenlager nach Anspruch 1, wobei das Basisöl ein gemischtes Öl von einem Mineralöl und einem synthetischen Kohlenwasserstofföl ist.

4. Nabenlager nach Anspruch 1, wobei das Basisöl in einer Menge von 59 bis 98 Masse-% für das gesamte Fett enthalten ist.

5. Nabenlager nach Anspruch 4, wobei das Basisöl in einer Menge von 65 bis 98 Masse-% für das gesamte Fett enthalten ist.

6. Nabenlager nach Anspruch 1, wobei ein Material des Nabenlagers für das drehbare Stützen der Räder des Wagens Kohlenstoffstahl für Maschinenbauanwendungen mit einem Laufringteil davon ist, der mit einer Hochfrequenzwelle wärmebehandelt wird.

7. Nabenlager nach Anspruch 6, wobei der Laufring eine Oberflächenhärte von HRC (Rockwell-Härte-Skala C) von 58 bis 63 aufweist.

8. Verwendung eines Fetts für ein Nabenlager, das das Rad eines Wagens drehbar stützt, das einen Wälzkontaktteil aufweist, der aus Kohlenstoffstahl für Maschinenbauanwendungen gefertigt ist,
wobei das Fett ein Basisöl, ein Verdickungsmittel und eine Organozinkverbindung umfasst,
wobei die Organozinkverbindung mindestens eine Verbindung ist ausgewählt unter Dithiozinkcarbamat und Dithiozinkphosphat,
die Organozinkverbindung in einer Menge von 0,1 bis 20 Masse-% für das gesamte Fett enthalten ist und
das Verdickungsmittel eine alicyclische-aromatische Harnstoffverbindung ist, die durch die Reaktion zwischen aromatischem Diisocyanat, alicyclischem Monoamin und aromatischem Monoamin hergestellt wird, die eine Diharnstoffverbindung ist, die durch die folgende Formel (1) gezeigt ist und in einer Menge von 1 bis 40 Masse-% für das gesamte Fett enthalten ist, 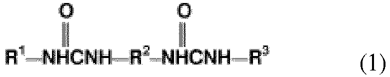 wobei R² eine aromatische Kohlenwasserstoffegruppe anzeigt, die 6 bis 15 Kohlenstoffatome aufweist, und R¹ und R³ mindestens eine Kohlenwasserstoffgruppe anzeigen, ausgewählt unter einer alicyclischen Kohlenwasserstoffgruppe und einer aromatischen Kohlenwasserstoffgruppe.

## Revendications

1. Palier de moyeu destiné à supporter une roue d'un véhicule de manière rotative, ayant une partie de contact de roulement constituée d'acier au carbone pour l'utilisation dans des pièces structurelles de machine,
une graisse étant enfermée dans ledit palier de moyeu ladite graisse comprenant une huile de base, un épaississant, et un composé d'organozinc,
ledit composé d'organozinc étant au moins un composé sélectionné parmi le carbamate de dithiozinc et le phosphate de dithiozinc,
ledit composé d'organozinc étant contenu sous un pourcentage de 0,1 à 20 % en masse pour la graisse entière, et
ledit épaississant étant un composé urée alicyclique aromatique préparé par la réaction entre le diisocyanate aromatique, la monoamine alicyclique et la monoamine aromatique, étant un composé diurée présenté par la formule suivante (1) et étant contenu sous un pourcentage de 1 à 40 % en masse pour la graisse entière, 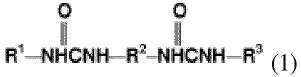 R² indiquant un groupe hydrocarbure aromatique ayant de 6 à 15 atomes de carbone, et R¹ et R³ indiquant au moins un groupe hydrocarbure sélectionné parmi un groupe hydrocarbure alicyclique et un groupe hydrocarbure aromatique.

2. Palier de moyeu selon la revendication 1, ladite huile de base étant une huile minérale.

3. Palier de moyeu selon la revendication 1, ladite huile de base étant une huile mixte d'une huile minérale et d'une huile hydrocarbure synthétique.

4. Palier de moyeu selon la revendication 1, ladite huile de base étant contenue sous un pourcentage de 59 à 98 % en masse pour la graisse entière.

5. Palier de moyeu selon la revendication 4, ladite huile de base étant contenue sous un pourcentage de 65 à 98 % en masse pour la graisse entière.

6. Palier de moyeu selon la revendication 1, un matériau dudit palier de moyeu destiné à supporter de manière à pouvoir tourner lesdites roues dudit véhicule étant de l'acier pour l'utilisation dans des pièces structurelles de machine avec sa partie de surface de roulement thermiquement traitée avec une onde à haute fréquence.

7. Palier de moyeu selon la revendication 6, ladite surface de roulement présentant une dureté de surface sur l'échelle HRC (échelle de dureté de Rockwell C) de 58 à 63.

8. Utilisation d'une graisse pour palier de moyeu supportant la roue d'un véhicule de manière à pouvoir tourner ayant une partie de contact de roulement constituée d'acier pour l'utilisation dans des pièces structurelles de machine,
ladite graisse comprenant une huile de base, un épaississant, et un composé d'organozinc,
ledit composé d'organozinc étant au moins un composé sélectionné parmi le carbamate de dithiozinc et le phosphate de dithiozinc,
ledit composé d'organozinc étant contenu sous un pourcentage de 0,1 à 20 % en masse pour la graisse entière, et
ledit épaississant étant un composé urée alicyclique aromatique préparé par la réaction entre le diisocyanate aromatique, la monoamine alicyclique et la monoamine aromatique, étant un composé diurée présenté par la formule suivante (1) et étant contenu sous un pourcentage de 1 à 40 % en masse pour la graisse entière, 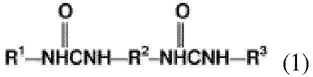 R² indiquant un groupe hydrocarbure aromatique ayant de 6 à 15 atomes de carbone, et R¹ et R³ indiquant au moins un groupe hydrocarbure sélectionné parmi un groupe hydrocarbure alicyclique et un groupe hydrocarbure aromatique.
